# EUROPÄISCHE PATENTSCHRIFT

(11) **EP 2 836 351 B1**
(45) Veröffentlichungstag und Bekanntmachung des Hinweises auf die Patenterteilung: **27.07.2016**
(21) Anmeldenummer: 13712204.0
(22) Anmeldetag: 21.03.2013
(51) Int. Cl.: B29C 47/00, B29C 47/34, B29C 53/20

(54) **VORRICHTUNG UND VERFAHREN ZUR FÜHRUNG EINER BLASFOLIE**
DEVICE AND METHOD FOR GUIDING A BLOWN FILM
DISPOSITIF ET PROCÉDÉ POUR GUIDER UNE FEUILLE SOUFFLÉE

(30) Priorität: 11.04.2012 DE 102012103095
(43) Veröffentlichungstag der Anmeldung: 18.02.2015
(73) Patentinhaber: Windmöller & Hölscher KG, 49525 Lengerich (DE)
(72) Erfinder: OBERDALHOFF, Tim, 49536 Lienen (DE)
(86) Internationale Anmeldenummer: PCT/EP2013/055875
(87) Internationale Veröffentlichungsnummer: WO 2013/152933

(56) Entgegenhaltungen:
- EP-A1- 1 714 770
- EP-A2- 1 967 350
- WO-A1-2007/079899
- WO-A2-2009/000509
- WO-A2-2009/000510
- WO-A2-2009/000511
- DE-A1-102005 038 730
- DE-C1- 19 617 811
- US-A- 5 441 395

## Beschreibung

Die vorliegende Erfindung betrifft eine Führungsvorrichtung für die Führung einer Blasfolie zwischen einem Folienblaskopf und einer Abzugswalzenvorrichtung sowie ein Verfahren zum Einstellen der Anstellwinkel von Führungsabschnitten gegenüberliegender Seitenführungen einer Führungsvorrichtung.

Führungsvorrichtungen für die Führung einer Blasfolie sind grundsätzlich bekannt. Zum Beispiel werden sie in der WO 2009/000510 A2 und in der WO 2009/000511 A2 beschrieben. Dabei handelt es sich grundsätzlich um Herstellvorrichtungen für Blasfolien. Hierfür sind häufig Folienblasköpfe im Einsatz, die einen Folienschlauch erzeugen. Dieser Folienschlauch soll anschließend flachgelegt werden, indem die beiden gegenüberliegenden Seiten des Blasfolienschlauchs aufeinandergelegt werden. Im Querschnitt betrachtet verändert sich dieser Querschnitt von einer im Wesentlichen runden Form ausgehend vom Folienblaskopf zu einem flachgelegten Querschnitt bei einer Abzugswalzenvorrichtung. Bei bekannten Herstellvorrichtungen für solche Blasfolien werden bereits Führungsvorrichtungen verwendet. Sie weisen zum Beispiel Flachlegeführungen und Seitenführungen auf. Diese dienen dazu, eine definierte Wegvorgabe für die Blasfolie zwischen dem Folienblaskopf und der Abzugswalzenvorrichtung zur Verfügung zu stellen. Insbesondere hinsichtlich zweier gegenüberliegender Seitenführungen für die seitliche Führung der Blasfolie ist es wichtig, welcher Winkel zwischen diesen Seitenführungen und der Förderrichtung der Blasfolie eingestellt ist. Insbesondere bei mehrteiligen Seitenführungen ist ein solcher Winkel beziehungsweise das Zusammenwirken unterschiedlicher Winkel relativ zur Förderrichtung der Blasfolie wichtig, um ein möglichst faltenfreies Zusammenlegen der Blasfolie für die Abzugswalzenvorrichtung zur Verfügung stellen zu können.

Bei bekannten Führungsvorrichtungen ist für das Variieren der Winkel ein manuelles Einstellen vorgesehen. Werden elektrische Antriebe verwendet, so erfolgt ein elektrischer Antrieb einzelner Abschnitte solcher Seitenführungen, um jeden Winkel separat einzustellen. Dies erfordert einen großen Zeitaufwand und benötigt darüber hinaus eine Vielzahl von Angriffspositionen um die Winkeleinstellung durchzuführen. Darüber hinaus ist nicht sichergestellt, dass sämtliche Winkel, die eingestellt worden sind, auch aufeinander abgestimmt wurden. Eine unabgestimmte Winkelsituation für die Seitenführungen kann dazu führen, dass Faltenwurf für erhöhten Ausschuss beim Flachlegeprozess für die Blasfolie sorgt.

Es ist Aufgabe der vorliegenden Erfindung, die voranstehend beschriebenen Nachteile zumindest teilweise zu beheben. Insbesondere ist es Aufgabe der vorliegenden Erfindung eine Führungsvorrichtung für die Führung einer Blasfolie zwischen einem Folienblaskopf und einer Abzugswalzenvorrichtung sowie ein entsprechendes Verfahren zum Einstellen der Anstellwinkel von Führungsabschnitten gegenüberliegender Seitenführungen einer Führungsvorrichtung zur Verfügung zu stellen, bei welcher in kostengünstiger und einfacher Weise das Einstellen der Winkel, vorzugsweise aller Winkel, insbesondere in gemeinsamer beziehungsweise gleichzeitiger Weise, erfolgen kann.

Die voranstehende Aufgabe wird gelöst durch eine Führungsvorrichtung mit den Merkmalen des Anspruchs 1 sowie durch ein Verfahren mit den Merkmalen des Anspruchs 14. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Führungsvorrichtung beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird beziehungsweise werden kann.

Eine erfindungsgemäße Führungsvorrichtung dient der Führung einer Blasfolie zwischen einem Folienblaskopf und einer Abzugswalzenvorrichtung. Die Führungsvorrichtung weist zumindest zwei einander gegenüberliegende Seitenführungen für die seitliche Führung der Blasfolie auf. Selbstverständlich können auch noch weitere Führungselemente, zum Beispiel Flachlegeführungen, vorgesehen sein. Jede dieser Seitenführungen kann Führungsmittel, zum Beispiel in Form von Gleitelementen oder Führungsrollen aufweisen, um das Führen möglichst reibungsarm für die Blasfolie zur Verfügung stellen zu können.

Eine erfindungsgemäße Führungsvorrichtung zeichnet sich dadurch aus, dass wenigstens eine Seitenführung einen ersten Führungsabschnitt und einen zweiten Führungsabschnitt aufweist. Der erste Führungsabschnitt und der zweite Führungsabschnitt sind miteinander gelenkig verbunden. Dabei ist wenigstens eine Hebelkinematik vorgesehen, welche mit einer Antriebsvorrichtung in Antriebsverbindung steht. Mit den Führungsabschnitten ist die Hebelkinematik derart verbunden, dass beim Antrieb der Antriebsvorrichtung über die Hebelkinematik die Anstellwinkel der beiden Führungsabschnitte zu der Förderrichtung der Blasfolie variierbar sind. Erfindungsgemäß erfolgt die Einstellung der Anstellwinkel (αₐ, αₑ) gemeinsam.

Bei einer erfindungsgemäßen Führungsvorrichtung ist also zumindest eine der beiden gegenüberliegenden Seitenführungen in erfindungsgemäßer Weise ausgestattet. Selbstverständlich kann es vorteilhaft sein, wenn beide einander gegenüberliegende Seitenführungen in der nachfolgend beschriebenen erfindungsgemäßen Weise ausgebildet sind. Beim Vorsehen von mehr als zwei einander gegenüberliegenden Seitenführungen ist eine erfindungsgemäße Ausbildung für eine Vielzahl beziehungsweise für alle diese Seitenführungen von Vorteil.

Die gelenkige Verbindung der beiden Führungsabschnitte kann zum Beispiel durch Gelenkmittel oder Scharniere zur Verfügung gestellt werden. Dabei können so genannte Klavierbänder, Filmscharniere oder wirkliche Gelenkscharniere zum Einsatz kommen. Die einzelnen Führungsabschnitte sind zum Beispiel Rahmenbauteile, welche eine Halterung für Führungsrollen oder Führungsgleitelemente bieten. Die Führungsabschnitte können hinsichtlich ihrer Führungswirkung vorzugsweise eine ebene oder im Wesentlichen ebene Erstreckung aufweisen. Damit kann in eindeutiger Weise ein Anstellwinkel des jeweiligen Führungsabschnittes zur Förderrichtung der Blasfolie definiert werden. Somit sind für jede Seitenführung, die in erfindungsgemäßer Weise ausgebildet ist, wenigstens zwei Winkel relativ zur Förderrichtung der Blasfolie einstellbar. Bei dem Führungsabschnitt, welcher als erster Führungsabschnitt näher am Folienblaskopf liegt, also als erstes von der Blasfolie berührt wird, ist dieser Anstellwinkel auch als Einlaufwinkel zu bezeichnen. Der zugehörige Winkel des zweiten Führungsabschnittes, welcher anschließend die Blasfolie berührt, kann auch als Auslaufwinkel zwischen dem zweiten Führungsabschnitt und der Förderrichtung der Blasfolie bezeichnet sein.

Bei einer erfindungsgemäßen Führungsvorrichtung ist eine Hebelkinematik vorgesehen, welche mit einer einzigen gemeinsamen Antriebsvorrichtung in Antriebsverbindung steht. Die Antriebsverbindung kann in unterschiedlichster Weise ausgebildet sein und umfasst beispielsweise ein Getriebe, eine Führungsschiene und/oder eine Kulissenführung und/oder eine Getriebevorrichtung. Selbstverständlich kann die Antriebsvorrichtung sowohl manuell, als auch automatisch ausgebildet sein. Vorzugsweise wird eine besonders kostengünstige Ausführungsform gewählt, so dass zum Beispiel ein Linearantrieb, insbesondere ein elektrisch-motorischer Linearantrieb, eingesetzt wird. Die Hebelkinematik selbst weist eine Mehrzahl von zumindest zwei Hebeln auf. Damit wird sichergestellt, dass von einer einzelnen Antriebsvorrichtung die zur Verfügung gestellte Bewegung dieser Antriebsvorrichtung über diese Hebelkinematik an die beiden Führungsabschnitte für die Variation der Anstellwinkel weitergegeben wird.

Im Gegensatz zu bekannten Führungsvorrichtungen gemäß dem Stand der Technik wird bei einer erfindungsgemäßen Ausführungsform über die Antriebsvorrichtung gemeinsam der Winkel der beiden Führungsabschnitte über die Hebelkinematik verstellt.

Es erfolgt eine gemeinsame Einstellung der beiden Anstellwinkel, so dass durch die Ausbildung der Hebelkinematik beziehungsweise der Antriebsvorrichtung automatisch die Korrelation dieser beiden Anstellwinkel zueinander vorgegeben ist. Darüber hinaus kann auch noch eine Abhängigkeit hinsichtlich des Durchmessers der Blasfolie beziehungsweise des Abstandes der zwei einander gegenüberliegenden Seitenführungen zueinander, für die Variation der Anstellwinkel vorgesehen sein. Damit wird sichergestellt, dass eine Fehleinstellung der Anstellwinkel beziehungsweise eine unpassende Korrelation einzelner Anstellwinkel für die beiden Führungsabschnitte übereinander, vermieden wird.

Darüber hinaus erfolgt durch das gemeinsame Verändern der Anstellwinkel eine besonders schnelle und damit kostengünstigere Variation der Anstellwinkel. Damit wird es möglich, dass bei einer Veränderung des Durchmessers der Blasfolie, zum Beispiel beim Produktwechsel und beim Ändern des Folienblaskopfes, eine besonders kurze Richtzeit für das Verändern der Führungsvorrichtung hinsichtlich der benötigten veränderten Anstellwinkel möglich wird.

Durch das Vorsehen von zwei unterschiedlichen Führungsabschnitten für wenigstens eine Seitenführung ergibt sich automatisch auch ein Winkel zwischen diesen beiden Führungsabschnitten. Die Verlängerung des ersten Führungsabschnittes bildet dabei einen Winkel mit dem zweiten Führungsabschnitt aus. Durch das Definieren der beiden Anstellwinkel der beiden Führungsabschnitte zur Förderrichtung der Blasfolie ergibt sich automatisch dieser weitere Winkel zwischen den beiden Führungsabschnitten, welcher auch als Knickwinkel zu bezeichnen ist. Dies führt dazu, dass vorzugsweise über die ersten Führungsabschnitte eine Verringerung des Abstandes der beiden einander gegenüberliegenden Seitenführungen stattfindet. Nach dem Knick zwischen den beiden Führungsabschnitten erfolgt ein Auseinanderlaufen der beiden zweiten einander gegenüberliegenden Führungsabschnitte, so dass eine Verbreiterung des Abstandes der beiden einander gegenüberliegenden Seitenführungen stattfindet. Diese Knickausführung der beiden Seitenführungen führt dazu, dass die Wegstrecke zwischen dem Folienblaskopf und der Abzugswalzenvorrichtung trotz der Veränderung des Querschnittes der Blasfolie im Wesentlichen konstant gehalten wird. Dieser Ausgleich hinsichtlich der Wegstrecke führt dazu, dass die Wahrscheinlichkeit von Faltenwurf auf dieser Strecke für die Blasfolie reduziert wird. Damit wird die Qualität der flachgelegten Blasfolie erhöht beziehungsweise der Ausschuss während dieses Prozesses reduziert.

Die Antriebsvorrichtung weist vorzugsweise eine oder mehrere Schiene/Schienen auf, in welcher/welchen Teile der Hebelkinematik beziehungsweise Teile der Antriebsvorrichtung geführt sind. Diese Schiene oder diese Schienen können auch als Führungskulisse(n) beziehungsweise als Schienenkulisse(n) oder Führungsschiene(n) ausgebildet sein.

Eine erfindungsgemäße Führungsvorrichtung kann dahingehend weitergebildet sein, dass die Antriebsvorrichtung wenigstens einen Schlitten aufweist, welcher entlang einer Schiene translatorisch bewegbar gelagert ist. Dieser Schlitten ist an wenigstens einer Stelle mit der Hebelkinematik verbunden, insbesondere an zwei Stellen. Bei dieser Verbindung handelt es sich um die Antriebsverbindung der Hebelkinematik mit der Antriebsvorrichtung. Der Teil der Antriebsvorrichtung, welcher als Schlitten ausgebildet ist, kann also geführt durch die Schiene auf einer definierten Bewegungsbahn translatorisch verschoben werden. Diese Bewegungsbahn kann vorzugsweise eine Gerade darstellen. Wird dieser Schlitten bewegt und damit über die Antriebsverbindung die Hebelkinematik mitbewegt, so folgt über die Hebelkinematik eine Weitergabe dieser Bewegung an die beiden Führungsabschnitte. Auf diese Weise wird durch die Hebelkinematik, insbesondere als Bewegungsweiche, eine Aufteilung der einzelnen Bewegungen des Schlittens auf zwei Bewegungen, nämlich auf eine Verstellung des ersten Führungsabschnittes und des zweiten Führungsabschnittes, in gemeinsamer Weise erzielt. Die Antriebsverbindung zwischen der Hebelkinematik und dem Schlitten ist vorzugsweise über eine Zapfenlagerung als rotatorische Lagerung ausgebildet. Die Schiene und der Schlitten sind im Rahmen der vorliegenden Erfindung vorzugsweise Teil der Antriebsvorrichtung. Vorzugsweise ist ein direkter Antrieb des Schlittens, zum Beispiel in elektromotorischer Weise, insbesondere als Linearantrieb, ausgebildet. Ein solcher Linearantrieb ist besonders kostengünstig und kann mit vielen zusätzlichen Funktionalitäten, insbesondere einer detaillierten Positionsbestimmung beziehungsweise einer einfachen Endschaltervorrichtung, ausgestattet sein. Der Schlitten kann sich zum Beispiel über Kugellager, Rollen oder auch in gleitender Weise in der Schiene bewegen.

Eine erfindungsgemäße Führungsvorrichtung kann dahingehend weitergebildet sein, dass wenigstens eine Führungsschiene vorgesehen ist, in welcher zumindest ein Führungshebel der Hebelkinematik translatorisch gelagert ist. Die translatorisch bewegbare Lagerung der Hebelkinematik, insbesondere des Führungshebels, kann ebenfalls über eine Rotationslagerung in Form eines Zapfens oder einer Rollenlagerung erfolgen. Damit kann der Führungshebel sich entlang dieser Führungsschiene ebenfalls im Wesentlichen entlang einer Gerade bewegen. Durch diese Bewegung erzeugt der Führungshebel einen Einfluss auf die Hebelkinematik, so dass eine Weitergabe der Bewegung des Führungshebels über die Hebelkinematik an die entsprechenden Führungsabschnitte durchgeführt werden kann. Die Ausrichtung der Führungsschiene dient dazu, eine Rotation beziehungsweise eine Hebelbewegung des Hebels durchzuführen, so dass insbesondere eine Steuerung der Hebelkinematik und damit eine Steuerung der Variation der Anstellwinkel der Führungsabschnitte durch die Führungsschiene ausgebildet sein kann. Insbesondere durch die Ausrichtung der Führungsschiene hinsichtlich der eigenen Winkelanstellung zur Förderrichtung der Blasfolie kann auf diese Weise die Stärke beziehungsweise die Art der Variation der Anstellwinkel der Führungsabschnitte angepasst werden. Der Führungshebel steuert insbesondere die Bewegung der Hebelkinematik und gibt auf diese Weise die Veränderung der Anstellwinkel aller oder zumindest eines Teils der Führungsabschnitte vor. Somit kann diese Führungsschiene auch als Führungskulisse ausgebildet sein, welche durch ihre Anordnung die Anpassung der Variation der Anstellwinkel möglich macht. Durch eine Veränderung des Anstellwinkels der Führungsschiene kann eine andere Charakteristik für eine erfindungsgemäße Führungsvorrichtung vorgegeben werden. So kann die Anbringung und Ausrichtung der Führungsschiene insbesondere als Grundeinstellung der erfindungsgemäßen Führungsvorrichtung dienen, so dass die gewünschte Variationscharakterisik für die Anstellwinkelvariation der Führungsvorrichtung durch die Winkelvariation bei der Ausrichtung der Führungsschiene vorgebbar ist.

Eine erfindungsgemäße Führungsvorrichtung kann dahingehend weitergebildet sein, dass die Führungsschiene mit der Fördervorrichtung der Blasfolie einen Winkel von kleiner als 90°, insbesondere von kleiner als ca. 88°, ausbildet. Die Führungsschiene steht also mit einem Winkel zur Fördervorrichtung, der nicht als Senkrechte ausgebildet ist. Damit entsteht eine spitzwinklige Ausrichtung der Führungsschiene zur Förderrichtung der Blasfolie. Durch diese Ausführungsform wird ein besonders einfaches Variieren der Anstellwinkel möglich, da auf diese Weise ein Verkippen der Hebelkinematik und damit die gewünschte Hebelbewegung für das Variieren der Anstellwinkel zur Verfügung gestellt werden kann.

Vorzugsweise verläuft eine solche Führungsschiene entlang einer Geraden, welche insbesondere nicht parallel und damit ebenfalls spitzwinklig, zu der Schiene der Antriebsvorrichtung verläuft, in welcher ein Schlitten translatorisch bewegbar gelagert ist. Durch die Auswahl des Winkels der Führungsschiene relativ zur Förderrichtung der Blasfolie kann, insbesondere in Form einer Grundeinstellung, die Variationscharakteristik für die Anstellwinkel einer erfindungsgemäßen Führungsvorrichtung vorgegeben werden.

Ebenfalls vorteilhaft kann es sein, wenn bei einer erfindungsgemäßen Führungsvorrichtung zumindest eine erste Führungsschiene und wenigstens eine zweite Führungsschiene vorgesehen ist. Dabei ist in der zumindest einen ersten Führungsschiene ein erster Führungshebel der Hebelkinematik und in der wenigstens einen zweiten Führungsschiene ein zweiter Führungshebel der Hebelkinematik translatorisch bewegbar gelagert. Ist eine solche Hebelkinematik mit mehreren Teilen ausgebildet, so kann der zumindest eine erste Führungshebel für die Variation des ersten Führungsabschnittes der Seitenführung und der zumindest eine zweite Führungshebel für die Variation des Anstellwinkels des zweiten Führungsabschnittes der Seitenführung zur Verfügung stehen. Mit anderen Worten ist für jeden Winkel jedes Führungsabschnittes vorzugsweise ein eigener Führungshebel mit einer eigenen Führungsschiene vorgesehen. Damit kann eine separate Einstellvorgabe jedes einzelnen Winkels durch die entsprechende Korrelation zwischen dem Führungshebel und der zugehörigen Führungsschiene vorgegeben werden. Insbesondere kann für jeden Anstellwinkel eine eigene Variationscharakteristik vorgegeben werden, so dass beim Betrieb einer erfindungsgemäßen Antriebsvorrichtung durch den Antrieb der Antriebsvorrichtung automatisch ein Folgen der Variation aller Anstellwinkel in gemeinsamer Weise hinsichtlich der jeweiligen Variationscharakteristik vorliegt. Die Einstellung aller Anstellwinkle erfolgt also gemeinsam und aufeinander abgestimmt durch die gemeinsame Antriebsvorrichtung.

Bei einer erfindungsgemäßen Führungsvorrichtung weist die Hebelkinematik für die Verbindung mit dem ersten Führungsabschnitt einen ersten Abschnittshebel und für die Verbindung mit dem zweiten Führungsabschnitt einen zweiten Abschnittshebel auf. Die Führungshebel, wie sie im voranstehenden Abschnitt erläutert worden sind, dienen zur Herstellung der Antriebsverbindung zwischen der Hebelkinematik und der Antriebsvorrichtung sowie zum definierten Aufnehmen der Winkel der gewünschten Variation. Am anderen Ende der Hebelkinematik dienen die beiden Abschnittshebel zur Anbindung der Hebelkinematik an den jeweiligen Führungsabschnitt. Sie dienen also der Übergabe der Bewegung von der Hebelkinematik an den jeweiligen Führungsabschnitt, so dass hier die Übergabe der ursprünglich von der Antriebsvorrichtung gemeinsam zur Verfügung gestellten Bewegung erfolgt. Die beiden Abschnittshebel können mit entsprechenden Führungshebeln, also der erste Abschnittshebel mit einem ersten Führungshebel und der zweite Abschnittshebel mit einem zweiten Führungshebel in hebelwirksamen Kontakt stehen.

Ein weiterer Vorteil ist es auch, wenn bei einer erfindungsgemäßen Führungsvorrichtung die Hebelkinematik zumindest einen ersten Kinematikteil, welcher mit dem ersten Führungsabschnitt, insbesondere über den ersten Abschnittshebel, verbunden ist, aufweist. Weiter ist wenigstens ein zweiter Kinematikteil vorgesehen, welcher mit dem zweiten Führungsabschnitt, insbesondere über den zweiten Abschnittshebel, verbunden ist. Mit anderen Worten kann der erste Kinematikteil den ersten Abschnittshebel und den ersten Führungshebel beziehungsweise der zweite Kinematikteil den zweiten Abschnittshebel und den zweiten Führungshebel umfassen. Die beiden Kinematikteile müssen nicht zwangsläufig miteinander mechanisch gekoppelt sein, sondern können vielmehr voneinander unabhängig sein. Die gemeinsame Bewegung dieser Hebelkinematik in zwei Teilen kann zum Beispiel über die Anbindung beider Kinematikteile an die Antriebsvorrichtung in antriebsverbindender Weise ausgebildet sein. Zum Beispiel können die beiden Kinematikteile der Hebelkinematik am gleichen Schlitten einer Antriebsverbindung voneinander beabstandet gelagert sein.

Ein weiterer Vorteil wird dadurch erzielt, dass bei einer erfindungsgemäßen Führungsvorrichtung wenigstens einer der beiden Kinematikteile über den ersten Führungshebel und/oder den zweiten Führungshebel mit der Antriebsvorrichtung insbesondere dem Schlitten, in Antriebsverbindung steht. Somit wird an dieser Stelle der Antriebsvorrichtung, also am Schlitten, eine Aufteilung der Bewegung des Schlittens beziehungsweise der Antriebsvorrichtung auf die beiden Kinematikteile erfolgen, so dass aus einer Bewegung des Schlittens eine doppelte Bewegung der Hebelkinematik und damit eine gemeinsame Bewegung beider Führungsabschnitte der entsprechenden Seitenführung folgt.

Ebenfalls vorteilhaft kann es sein, wenn bei einer erfindungsgemäßen Führungsvorrichtung die Antriebsvorrichtung zumindest eine umlaufende Kettenvorrichtung aufweist, über welche die Antriebsvorrichtung mit zumindest einer weiteren Hebelkinematik in Antriebsverbindung steht. Diese Kettenvorrichtung kann zum Beispiel ein umlaufendes Band oder eine umlaufende Kette sein, welche mit einer Umlaufwalze eine Übertragung einer Bewegung der Antriebsvorrichtung zum Beispiel in Form eines Schlittens möglich macht. So kann dabei insbesondere eine Bewegungsrichtungsumkehr stattfinden, so dass eine Antriebsvorrichtung für die erste Seitenführung einen ersten Schlitten antreibt, während für die gegenüberliegende Seitenführung ein zugehöriger zweiter Schlitten mit entgegengesetzter Anbindung und damit entgegengesetzter Bewegungsrichtung von der gleichen Antriebsvorrichtung angetrieben wird. Vorzugsweise sind nicht nur eine sondern zwei oder mehrere solcher Kettenvorrichtungen vorgesehen, so dass ein symmetrisches Antreiben beziehungsweise ein symmetrisches Abstützen in einem Rahmen für die Führungsabschnitte vorgesehen sein kann. Dies führt dazu, dass bei zwei Seitenführungen mit jeweils zwei Führungsabschnitten eine einzige Antriebsvorrichtung mit einem einzigen elektrischen Antrieb vorgesehen sein kann, während insgesamt vier Schienen für die translatorisch bewegbare Lagerung von vier Schlitten, zwei Kettenvorrichtungen für die Übertragung der Bewegung des elektrischen Antriebs sowie vier Führungsschienen für die zugehörigen vier Führungshebel für alle vier Führungsabschnitte vorgesehen sind.

Ein weiterer Vorteil kann dann erzielt werden, wenn bei einer erfindungsgemäßen Führungsvorrichtung die Kettenvorrichtung über wenigstens eine Klammer mit zumindest einem Schlitten verbunden ist, welcher entlang einer Schiene translatorisch bewegbar gelagert ist, und mit welchem die Hebelkinematik an wenigstens einer Stelle, insbesondere an zwei Stellen, in Antriebsverbindung steht. Dabei handelt es sich vorzugsweise um einen oder mehrere Schlitten, wobei eine Kraftübertragung zwischen den Schlitten über die Klammer- und der Kettenvorrichtung stattfinden kann. Durch die örtliche Wahl der Anbindung über die Klammer kann die Bewegungsrichtung gewählt werden, so dass bei gegenüberliegenden Seitenführungen eine entgegengesetzte Bewegungsrichtung mit einem einzigen Antrieb beziehungsweise einer einzigen Antriebsvorrichtung möglich ist.

Ein weiterer Vorteil wird dadurch erzielt, dass bei einer erfindungsgemäßen Führungsvorrichtung wenigstens ein Rahmen vorgesehen ist, in welchem die Antriebsvorrichtung und/oder die Hebelkinematik und/oder die Seitenführungen gelagert ist/sind. Dazu gehören insbesondere Schienen und/oder Führungsschienen beziehungsweise die Schlitten welche in den Schienen laufen. Der Rahmen dient der mechanischen Stabilität beziehungsweise der Möglichkeit der Anlenkung beziehungsweise Lagerung einer erfindungsgemäßen Führungsvorrichtung bei der Herstellvorrichtung für die Blasfolie. Dadurch, dass in einem einzigen Rahmen vorzugsweise die meisten oder alle mechanisch wirksamen Bauteile der Führungsvorrichtung gelagert sein können, kann auf weitere Rahmenbauteile insbesondere am gegenüberliegenden Ende der Führungsvorrichtung, verzichtet werden. Der Rahmen dient vorzugsweise auch als Abstützung für einen elektromotorischen Antrieb der Antriebsvorrichtung.

Erfindungsgemäß kann es ebenfalls von Vorteil sein, wenn bei einer erfindungsgemäßen Führungsvorrichtung die Antriebsvorrichtung zumindest einen elektrischen Motor, insbesondere in Form eines Linearantriebes, aufweist. Die Verwendung eines elektrischen Motors ermöglicht eine besonders kostengünstige und einfache Automatisierung der Variation der Anstellwinkel. Die Verwendung eines Linearantriebs führt darüber hinaus zu kostengünstigen Zusatzfunktionen wie zum Beispiel dem Vorsehen eines Endschalters beziehungsweise einer besonders genauen Positionsbestimmung eines durch diesen Linearantrieb angetriebenen Schlittens.

Ein weiterer Vorteil wird dadurch erzielt, dass bei einer erfindungsgemäßen Führungsvorrichtung die beiden Seitenführungen identisch ausgebildet sind und beide eine Hebelkinematik aufweisen, welche mit der gleichen Antriebsvorrichtung in Antriebsverbindung stehen. Dies führt dazu, dass eine im Wesentlichen symmetrische erfindungsgemäße Ausführungsform vorgegeben wird, so dass mit ein und derselben Antriebsvorrichtung, insbesondere mit einem einzigen elektrischen Antrieb, die Variation sämtlicher Anstellwinkel aller vier Führungsabschnitte beider Seitenführungen durchgeführt werden kann.

Ein weiterer Gegenstand der vorliegenden Erfindung ist ein Verfahren zum Einstellen der Anstellwinkel von Führungsabschnitten gegenüberliegender Seitenführungen einer Führungsvorrichtung. Ein solches Verfahren zeichnet sich dadurch aus, dass durch den Antrieb einer Antriebsvorrichtung über eine Antriebsverbindung mit wenigstens einer Hebelkinematik die Anstellwinkel von wenigstens zwei Führungsabschnitten gemeinsam, insbesondere gleichzeitig, variiert werden. Ein solches Verfahren kann vorzugsweise dahingehend weitergebildet sein, dass die Führungsvorrichtung in erfindungsgemäßer Weise ausgebildet ist. Dies bringt die gleichen Vorteile mit sich, wie sie ausführlich mit Bezug auf eine erfindungsgemäße Führungsvorrichtung erläutert worden sind.

Die vorliegende Erfindung wird näher erläutert anhand der beigefügten Zeichnungsfiguren. Die dabei verwendeten Begrifflichkeiten "links", "rechts", "oben" und "unten" beziehen sich auf eine Ausrichtung der Zeichnungsfiguren mit normallesbaren Bezugszeichen. Es zeigen schematisch:
- Figur 1: eine erste Ausführungsform einer erfindungsgemäßen Führungsvorrichtung mit maximaler Arbeitsbreite,
- Figur 2: eine weitere Ausführungsform einer erfindungsgemäßen Führungsvorrichtung mit mittlerer Arbeitsbreite und
- Figur 3: eine weitere Ausführungsform einer erfindungsgemäßen Führungsvorrichtung mit minimaler Arbeitsbreite.

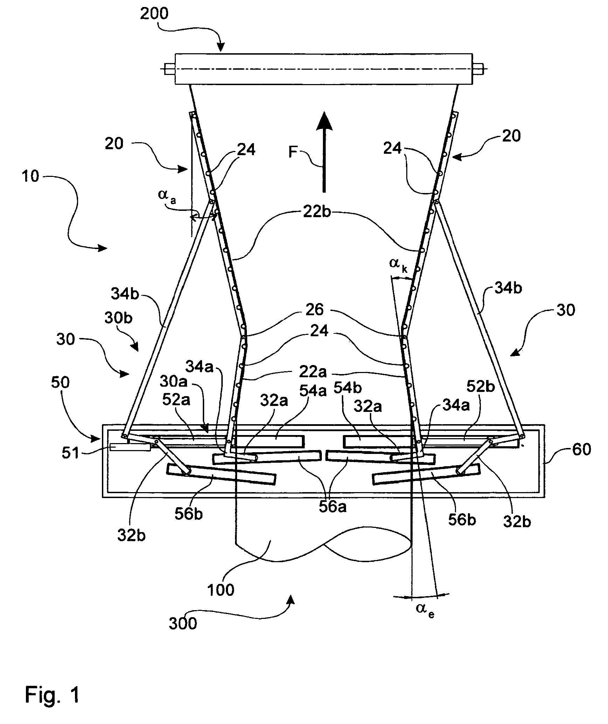

In allen drei Figuren 1 bis 3 ist eine unterschiedliche Einstellung der jeweiligen Hebelkinematik 30 und damit einhergehend eine entsprechende unterschiedliche Ausbildung der Anstellwinkel αₖ, αₑ, αₐ dargestellt. Wie ebenfalls den drei Figuren zu entnehmen ist, unterscheiden sich auch die Durchmesser der jeweiligen Blasfolie 100. Es besteht insbesondere eine Korrelation zwischen dem Durchmesser der Blasfolie 100, welche durch den Ausgabedurchmesser des Folienblaskopfes 300 (nicht dargestellt) vorgegeben wird, und den sich einstellenden beziehungsweise notwendigen Anstellwinkel αₖ, αₑ, αₐ.

Anhand von Figur 1 soll kurz die Funktionsweise der vorliegenden Erfindung näher erläutert werden. Bei dieser Ausführungsform wird von einem nicht dargestellten Folienblaskopf 300 eine Blasfolie 100 hergestellt. Diese weist einen im Wesentlichen runden Querschnitt auf. Sie wird entlang der Förderrichtung F auf eine Abzugswalzenvorrichtung 200 zubewegt. Die Abzugswalzenvorrichtung 200 weist zumindest zwei Abzugswalzen auf, die gegenläufig zueinander rotieren und eine flachgelegte Foliendoppelbahn der Blasfolie 100 weitertransportieren. Für den Weg zwischen dem Folienblaskopf 300 und der Abzugswalzenvorrichtung 200 ist die erfindungsgemäße Führungsvorrichtung 10 vorgesehen.

Für eine Variation der Anstellwinkel αₖ, αₑ, αₐ ist bei der erfindungsgemäßen Führungsvorrichtung 10 jeweils eine Seitenführung 20 auf der linken und der rechten Seite der Blasfolie 100 vorgesehen. Beide Seitenführungen 20 liegen einander gegenüber und sind im Wesentlichen identisch, das heißt mit einer gemeinsamen Verstellmöglichkeit über eine Antriebsvorrichtung 50 ausgebildet. Dementsprechend wird hier nur die Verstellung einer der beiden Seitenführungen 20 beschrieben, wobei diese Beschreibung in gleicher Weise auch für die andere Seitenführung 20 funktioniert.

Jede Seitenführung 20 weist zwei Führungsabschnitte 22a und 22b auf. Diese Führungsabschnitte 22a und 22b sind jeweils rahmenartig ausgebildet und weisen Führungsrollen 24 auf, die in reibungsminimierter Weise eine seitliche Führung der Blasfolie 100 gewährleisten. Die Blasfolie 100 wird zuerst hinsichtlich des Durchmessers quer zur Förderrichtung F eingeengt und anschließend während des Flachlegeprozesses auf die Abzugswalzenvorrichtung 200 zu wieder verbreitert. Damit ergibt sich ein erster Einlaufwinkel αₑ, ein Knick mit einem Knickwinkel αₖ und ein Auslaufwinkel αₐ auf die Abzugswalzenvorrichtung 200 zu.

Um die voranstehend beschriebenen Winkel verstellen zu können, ist eine Antriebsvorrichtung 50 vorgesehen. Diese weist bei dieser Ausführungsform einen Motor 51 in Form eines Linearantriebs 51 auf. Dieser Linearantrieb 51 der Antriebsvorrichtung 50 greift auf einen Schlitten 52a zu, welcher translatorisch bewegbar in einer Schiene 54a gelagert ist. Mit anderen Worten kann über den Motor 51 automatisch der Schlitten 52a in der Schiene 54a nach links und nach rechts verschoben werden.

An dem Schlitten 52a ist an zwei Positionen eine Anlenkung an die Hebelkinematik 30 vorgesehen. Am linken Ende ist die Anlenkung an einen zweiten Kinematikteil 30b und am rechten Ende des Schlittens 52a eine Anlenkung an den ersten Kinematikteil 30a vorgesehen. Jeder dieser beiden Kinematikteile 30a, 30b weist jeweils einen Führungshebel 32a und 32b auf. Ebenfalls weist jeder dieser beiden Kinematikteile 30a und 30b einen Abschnittshebel 34a und 34b auf, über welchen eine Wirkverbindung beziehungsweise eine Anlenkung an den jeweiligen Führungsabschnitt 22a und 22b vorgesehen ist. Die beiden Führungsabschnitte 22a und 22b sind miteinander gelenkig über ein Gelenk 26 verbunden.

Wird nun über der Motor 51 der Schlitten 52a in seiner Führung 54a nach rechts bewegt, so erfolgt automatisch ein Mitnehmen der beiden Kinematikteile 30a und 30b über die jeweilige Anbindung am Schlitten 52a. Damit wird automatisch auch der jeweilige Führungshebel 32a und 32b nach rechts verschoben. Bei der Bewegung der Führungshebel 32a und 32b nach rechts folgen die Enden der Führungshebel 32a und 32b über eine Rollenlagerung jeweils einer Führungsschiene 56a und 56b. Der erste Führungshebel 32a bewegt sich dabei in einer ersten Führungsschiene 56a nach oben, während der zweite Führungshebel 32b bei der Bewegung des Schlittens 52a nach rechts der zweiten Führungsschiene 56b nach unten folgt. Die beiden Führungsschienen 56a und 56b sind nicht senkrecht zur Förderrichtung F sondern weisen konträre beziehungsweise in unterschiedliche Richtungen ausgerichtete spitze Anstellwinkel zur Förderrichtung F auf.

Durch die im voranstehenden Absatz beschriebene Bewegung der beiden Führungshebel 32a und 32b wird auf jeden der beiden Kinematikteile 30a und 30b eine Kippbewegung aufgebracht. Diese Kippbewegung beziehungsweise Hebelbewegung wird über den jeweiligen Kinematikteil 30a und 30b der Hebelkinematik, insbesondere über den jeweiligen Abschnittshebel 34a und 34b, an den jeweils zugehörigen Führungsabschnitt 22a und 22b weitergegeben. Die Weitergabe erfolgt in einem höheren beziehungsweise geringeren Anstellen der beiden Führungsabschnitte 22a.

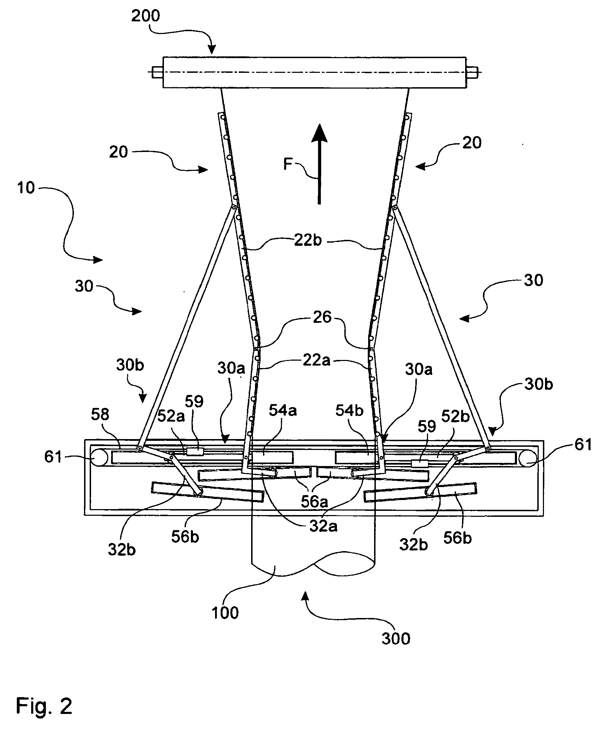

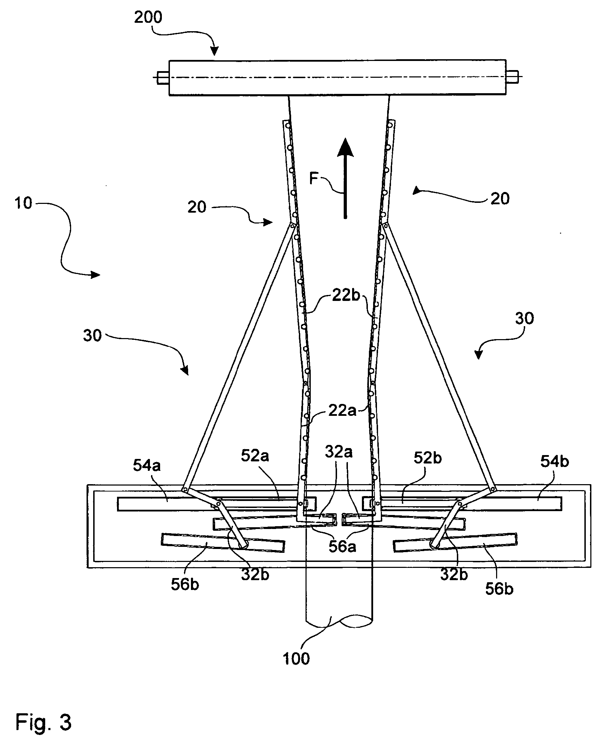

Grundsätzlich wird diese Veränderung in den Figuren 2 und 3 dargestellt, auch wenn dort leichte Variationen der erfindungsgemäßen Führungsvorrichtung 10 abgebildet sind. So wird durch eine Bewegung des Schlittens 52a nach rechts eine Verringerung des Durchmessers der Blasfolie 100 möglich beziehungsweise eine Anpassung an einen verringerten Durchmesser der Blasfolie 100. Gleichzeitig verkleinert sich der Einlaufwinkel αₑ und der Auslaufwinkel αₐ sowie damit auch der Knickwinkel αₖ. Im Endanschlag gemäß Figur 3 ist eine minimale Ausbildung aller Anstellwinkel αₑ und αₐ der beiden Führungsabschnitte 22a und 22b zu erkennen. Gleichzeitig ist hier der minimale Querschnitt der Blasfolie 100 erreicht. Selbstverständlich kann auch in die entgegengesetzte Richtung wieder gefahren werden, um beim maximalen Durchmesser der Blasfolie 100 maximalen Einlaufwinkel αₑ und maximalen Auslaufwinkel αₐ zur Verfügung stellen zu können.

Allen Ausführungsformen gemäß den Figuren 1 bis 3 ist es gemeinsam, dass beide Seitenführungen 20 in wesentlich identischer Weise ausgebildet sind. Um zu ermöglichen, dass ein einziger Motor 51 in erfindungsgemäßer Weise alle Führungsabschnitte 22a und 22b beider Seitenführungen 20 hinsichtlich der Anstellwinkel αₑ und αₐ variieren kann, ist bei der Ausführungsform gemäß Figur 2 eine Kettenvorrichtung 58 vorgesehen. Sie ist insbesondere als Band, vorzugsweise aus Kunststoff, ausgebildet und läuft an der linken und rechten Endseite eines entsprechenden Rahmens 60 um Umlenkrollen 61 um. Über Klammern 59 beziehungsweise Klammervorrichtungen erfolgt eine translatorische Anbindung zwischen einem ersten Schlitten 52a, wie er hinsichtlich Figur 1 erläutert worden ist, und einem zweiten Schlitten 52b. Die Anbindung über die Klammer 59 erfolgt einmal am oberen und beim anderen Mal am unteren Ende des Schlittens 52a beziehungsweise 52b, so dass beim Umlauf der Kettenvorrichtung 58 auch eine Umkehr der Bewegungsrichtung der beiden Schlitten zueinander erfolgt. Wird durch einen Motor 51 der linke Schlitten 52a nach rechts bewegt, so erfolgt über die Anbindung der beiden Klammern 59 und die Zusammenwirkung mit der Kettenvorrichtung 58 eine Bewegung des zweiten Schlittens 52b nach links. Die beiden Schlitten 52a und 52b bewegen sich also entweder aufeinander zu oder voneinander weg. Über die Umlenkrollen 61 kann eine entsprechende Welle auch auf der gegenüberliegenden Seite, also oberhalb der Zeichnungsebene der Figur 2 liegend, eine identische Ausbildung antreiben, wie sie in Figur 2 gezeigt ist. Dies führt zu einer Verdopplung der gesamten mechanischen Bauteile, so dass eine beidseitige Lagerung beider Seitenführungen 20 wie auch beider Hebelkinematiken 30 sowie eine beidseitige Einflussnahme auf die jeweiligen Kinematikteile 30a und 30b erfolgen kann. Auch bei dieser Ausführungsform erfolgt die Variation in der Weise, wie sie ausführlich bezüglich Figur 1 erläutert worden ist.

| **Bezugszeichenliste** | |
|---|---|
| 10 | Führungsvorrichtung |
| | |
| 20 | Seitenführungen |
| 22a | erster Führungsabschnitt |
| 22b | zweiter Führungsabschnitt |
| 24 | Führungsrollen |
| 26 | Gelenk |
| | |
| 30 | Hebelkinematik |
| 30a | erstes Kinematikteil |
| 30b | zweites Kinematikteil |
| 32a | erster Führungshebel |
| 32b | zweiter Führungshebel |
| 34a | erster Abschnittshebel |
| 34b | zweiter Abschnittshebel |
| | |
| 50 | Antriebsvorrichtung |
| 51 | Motor |
| 52a, 52b | Schlitten |
| 54a, 54b | Schiene |
| 56a | erste Führungsschiene |
| 56b | zweite Führungsschiene |
| 58 | Kettenvorrichtung |
| 59 | Klammer |
| | |
| 60 | Rahmen |
| 61 | Umlenkrolle |
| αₖ | Knickwinkel |
| αₑ | Einlaufwinkel |
| αₐ | Auslaufwinkel |
| | |
| 100 | Blasfolie |
| 200 | Abzugswalzenvorrichtung |
| 300 | Folienblaskopf |
| | |
| F | Förderrichtung |

## Patentansprüche

1. Führungsvorrichtung (10) für die Führung einer Blasfolie (100) zwischen einem Folienblaskopf (300) und einer Abzugswalzenvorrichtung (200), aufweisend zumindest zwei einander gegenüberliegende Seitenführungen (20) für die seitliche Führung der Blasfolie (100),
**dadurch gekennzeichnet,**
**dass** wenigstens eine Seitenführung (20) einen ersten Führungsabschnitt (22a) und einen zweiten Führungsabschnitt (22b) aufweist, die miteinander gelenkig verbunden sind, wobei wenigstens eine Hebelkinematik (30) vorgesehen ist, welche eine Mehrzahl von zumindest zwei Hebeln (32a, 32b, 34a, 34b) aufweist und mit einer einzigen gemeinsamen Antriebsvorrichtung (50) in Antriebsverbindung steht und mit den beiden Führungsabschnitten (22a, 22b) derart verbunden ist, dass beim Antrieb der Antriebsvorrichtung (50) über die Hebelkinematik (30) die Anstellwinkel (αₐ, αₑ) der beiden Führungsabschnitte (22a, 22b) zu der Förderrichtung (F) der Blasfolie (100) variierbar sind, wobei die Einstellung der Anstellwinkel (αₐ, αₑ) gemeinsam erfolgt.

2. Führungsvorrichtung (10) nach Anspruch 1,
**dadurch gekennzeichnet,**
**dass** die Antriebsvorrichtung (50) wenigstens einen Schlitten (52a, 52b) aufweist, welcher entlang einer Schiene (54a, 54b) translatorisch bewegbar gelagert ist und mit welchem die Hebelkinematik (30) an wenigstens einer Stelle, insbesondere an zwei Stellen, in Antriebsverbindung steht.

3. Führungsvorrichtung (10) nach einem der vorangegangenen Ansprüche,
**dadurch gekennzeichnet,**
**dass** wenigstens eine Führungsschiene (56a, 56b) vorgesehen ist, in welcher zumindest ein Führungshebel (32a, 32b) der Hebelkinematik (30) translatorisch bewegbar gelagert ist.

4. Führungsvorrichtung (10) nach Anspruch 3,
**dadurch gekennzeichnet,**
**dass** die Führungsschiene (56a, 56b) mit der Förderrichtung (F) der Blasfolie (100) einen Winkel von kleiner als 90°, insbesondere von kleiner als ca. 88°, ausbildet.

5. Führungsvorrichtung (10) nach einem der Ansprüche 3 oder 4,
**dadurch gekennzeichnet,**
**dass** zumindest eine erste Führungsschiene (56a) und wenigstens eine zweite Führungsschiene (56b) vorgesehen ist, wobei in der zumindest einen ersten Führungsschiene (56a) ein erster Führungshebel (32a) der Hebelkinematik (30) und in der wenigstens einen zweiten Führungsschiene (56b) ein zweiter Führungshebel (32b) der Hebelkinematik (30) translatorisch bewegbar gelagert ist.

6. Führungsvorrichtung (10) nach einem der vorangegangenen Ansprüche,
**dadurch gekennzeichnet,**
**dass** die Hebelkinematik (30) für die Verbindung mit dem ersten Führungsabschnitt (22a) einen ersten Abschnittshebel (34a) und für die Verbindung mit dem zweiten Führungsabschnitt (22b) einen zweiten Abschnittshebel (34b) aufweist.

7. Führungsvorrichtung (10) nach einem der vorangegangenen Ansprüche,
**dadurch gekennzeichnet,**
**dass** die Hebelkinematik (30) zumindest einen ersten Kinematikteil (30a), welcher mit dem ersten Führungsabschnitt (22a) insbesondere über den ersten Abschnittshebel (34a) verbunden ist, und wenigstens einen zweiten Kinematikteil (30b) aufweist, welcher mit dem zweiten Führungsabschnitt (22b) insbesondere über den zweiten Abschnittshebel (34b) verbunden ist.

8. Führungsvorrichtung (10) nach Anspruch 7,
**dadurch gekennzeichnet,**
**dass** wenigstens einer der beiden Kinematikteile (30a, 30b), insbesondere über den ersten Führungshebel (32a) und/oder den zweiten Führungshebel (32b), mit der Antriebsvorrichtung (50), insbesondere dem Schlitten (52a, 52b), in Antriebsverbindung steht.

9. Führungsvorrichtung (10) nach einem der vorangegangenen Ansprüche,
**dadurch gekennzeichnet,**
**dass** die Antriebsvorrichtung (50) zumindest eine umlaufende Kettenvorrichtung (58) aufweist, über welche die Antriebsvorrichtung (50) mit zumindest einer weiteren Hebelkinematik (30) in Antriebsverbindung steht.

10. Führungsvorrichtung (10) nach Anspruch 9,
**dadurch gekennzeichnet,**
**dass** die Kettenvorrichtung (58) über wenigstens eine Klammer (59) mit zumindest einem Schlitten (52a, 52b) verbunden ist, welcher entlang einer Schiene (54a, 54b) translatorisch bewegbar gelagert ist und mit welchem die Hebelkinematik (30) an wenigstens einer Stelle, insbesondere an zwei Stellen, in Antriebsverbindung steht.

11. Führungsvorrichtung (10) nach einem der vorangegangenen Ansprüche,
**dadurch gekennzeichnet,**
**dass** wenigstens ein Rahmen (60) vorgesehen ist, in welchem die Antriebsvorrichtung (50) und/oder die Hebelkinematik (30) und/oder die Seitenführungen (20) gelagert sind.

12. Führungsvorrichtung (10) nach einem der vorangegangenen Ansprüche,
**dadurch gekennzeichnet,**
**dass** die Antriebsvorrichtung (50) zumindest einen elektrischen Motor (51), insbesondere in Form eines Linearantriebs, aufweist.

13. Führungsvorrichtung (10) nach einem der vorangegangenen Ansprüche,
**dadurch gekennzeichnet,**
**dass** die beiden Seitenführungen (20) identisch ausgebildet sind und beide eine Hebelkinematik (30) aufweisen, welche mit der gleichen Antriebsvorrichtung (50) in Antriebsverbindung stehen.

14. Verfahren zum Einstellen der Anstellwinkel (αₐ, αₑ) von Führungsabschnitten (22a, 22b) gegenüberliegender Seitenführungen (20) einer Führungsvorrichtung (10) zur Führung einer Blasfolie (100) zwischen einem Folienblaskopf (300) und einer Abzugswalzenvorrichtung (200),
**dadurch gekennzeichnet,**
**dass** durch den Antrieb einer einzigen gemeinsamen Antriebsvorrichtung (50) über eine Antriebsverbindung mit wenigstens einer Hebelkinematik (30), welche eine Mehrzahl von zumindest zwei Hebeln (32a, 32b, 34a, 34b) aufweist, die Anstellwinkel (αₐ, αₑ) von wenigstens zwei Führungsabschnitten (22a, 22b) gemeinsam, insbesondere gleichzeitig, variiert werden, wobei die Führungsvorrichtung (10) nach einem der Ansprüche 1 bis 13 ausgebildet ist.

## Claims

1. Guide device (10) for guiding a blown film (100) between a blown film die (300) and a drawing-off roller device (200), having at least two mutually opposite lateral guides (20) for literally guiding the blown film (100),
**characterized in**
**that** at least one lateral guide (20) has a first guide portion (22a) and a second guide portion (22b) which are interconnected in an articulated manner, wherein at least one kinematic lever assembly (30) which has a plurality of at least two levers (32a, 32b, 34a, 34b) is provided and in drive connection with a single common drive device (50) and is connected to the two guide portions (22a, 22b) in such a manner that during driving of the drive device (50) by way of the kinematic lever assembly (30) the approach angles αₐ, αₑ) of the two guide portions (22a, 22b) in relation to the conveying direction (F) of the blown film (100) are variable, wherein setting of the approach angles (αₐ, αₑ) is collectively performed.

2. Guide device (10) according to Claim 1,
**characterized in**
**that** the drive device (50) has at least one slide (52a, 52b) which is mounted so as to be movable in a translational manner along a rail (54a, 54b) and with which the kinematic lever assembly (30) is in drive connection at least at one point, in particular at two points.

3. Guide device (10) according to one of the preceding claims,
**characterized in**
**that** at least one guide rail (56a, 56b) in which at least one guide lever (32a, 32b) of the kinematic lever assembly (30) is mounted so as to be movable in a translational manner is provided.

4. Guide device (10) according to Claim 3,
**characterized in**
**that** the guide rail (56a, 56b) in relation to the conveying direction (F) of the blown film (100) forms an angle of less than 90°, in particular of less than approx. 88°.

5. Guide device (10) according to either of Claims 3 and 4,
**characterized in**
**that** at least one first guide rail (56a) and at least one second guide rail (56b) are provided, wherein a first guide lever (32a) of the kinematic lever assembly (30) is mounted so as to be movable in a translational manner in the at least one first guide rail (56a), and a second guide lever (32b) of the kinematic lever assembly (30) is mounted so as to be movable in a translational manner in the at least one second guide rail (56b).

6. Guide device (10) according to one of the preceding claims,
**characterized in**
**that** the kinematic lever assembly (30) has a first portion lever (34a) for the connection to the first guide portion (22a), and has a second portion lever (34b) for the connection to the second guide portion (22b).

7. Guide device (10) according to one of the preceding claims,
**characterized in**
**that** the kinematic lever assembly (30) has at least a first kinematics part (30a) which in particular by way of the first portion lever (34a) is connected to the first guide portion (22a), and at least one second kinematics part (30b) which in particular by way of the second portion lever (34b) is connected to the second guide portion (22b).

8. Guide device (10) according to Claim 7,
**characterized in**
**that** at least one of the two kinematics parts (30a, 30b) in particular by way of the first guide lever (32a) and/or the second guide lever (32b) is in drive connection with the drive device (50), in particular with the slide (52a, 52b).

9. Guide device (10) according to one of the preceding claims,
**characterized in**
**that** the drive device (50) has at least one revolving chain device (58) by way of which the drive device (50) is in drive connection with at least one further kinematic lever assembly (30).

10. Guide device (10) according to Claim 9,
**characterized in**
**that** the chain device (58) by way of at least one clamp (59) is connected to at least one slide (52a, 52b) which is mounted so as to be movable in a translational manner along a rail (54a, 54b), and with which the kinematic lever assembly (30) is in drive connection at least at one point, in particular at two points.

11. Guide device (10) according to one of the preceding claims,
**characterized in**
**that** at least one frame (60) in which the drive device (50) and/or the kinematic lever assembly (30) and/or the lateral guides (20) are/is mounted is provided.

12. Guide device (10) according to one of the preceding claims,
**characterized in**
**that** the drive device (50) has at least one electric motor (51), in particular in the form of a linear drive.

13. Guide device (10) according to one of the preceding claims,
**characterized in**
**that** the two lateral guides (20) are of identical configuration, both having a kinematic lever assembly (30) which is in drive connection with the same drive device (50).

14. Method for setting the approach angles (αₐ, αₑ) of guide portions (22a, 22b) of mutually opposite lateral guides (20) of a guide device (10) for guiding a blown film (100) between a blown film die (300) and a drawing-off roller device (200),
**characterized in**
**that** by driving a single common drive device (50) by way of a drive connection having at least one kinematic lever assembly (30), which has a plurality of at least two levers (32a, 32b, 34a, 34b), the approach angles (αₐ, αₑ) of at least two guide portions (22a, 22b) are collectively, in particular simultaneously, varied, wherein the guide device (10) is configured according to one of Claims 1 to 13.

## Revendications

1. Dispositif de guidage (10) pour le guidage d'un film soufflé (100) entre une tête de soufflage de film (300) et un dispositif à rouleaux de tirage (200), présentant au moins deux guides latéraux mutuellement opposés (20) pour le guidage latéral du film soufflé (100),
**caractérisé en ce**
**qu'**au moins un guide latéral (20) présente une première portion de guidage (22a) et une deuxième portion de guidage (22b) qui sont connectées de manière articulée l'une à l'autre, au moins une cinématique à levier (30) étant prévue, laquelle présente une pluralité d'au moins deux leviers (32a, 32b, 34a, 34b) et est en liaison d'entraînement avec un dispositif d'entraînement unique commun (50) et est connectée aux deux portions de guidage (22a, 22b) de telle sorte que lors de l'entraînement du dispositif d'entraînement (50) par le biais de la cinématique à levier (30), les angles d'inclinaison (αa, αe) des deux portions de guidage (22a, 22b) puissent être variés par rapport à la direction d'avance (F) du film soufflé (100), l'ajustement des angles d'inclinaison (αa, αe) s'effectuant conjointement.

2. Dispositif de guidage (10) selon la revendication 1,
**caractérisé en ce que**
le dispositif d'entraînement (50) présente au moins un chariot (52a, 52b) qui est supporté de manière déplaçable en translation le long d'un rail (54a, 54b) et avec lequel la cinématique à levier (30) est en liaison d'entraînement au niveau d'au moins un emplacement, en particulier au niveau de deux emplacements.

3. Dispositif de guidage (10) selon l'une quelconque des revendications précédentes,
**caractérisé en ce**
**qu'**au moins un rail de guidage (56a, 56b) est prévu, dans lequel est supporté de manière déplaçable en translation au moins un levier de guidage (32a, 32b) de la cinématique à levier (30).

4. Dispositif de guidage (10) selon la revendication 3,
**caractérisé en ce que**
le rail de guidage (56a, 56b) forme avec la direction de transport (F) du film soufflé (100) un angle inférieur à 90°, en particulier inférieur à environ 88°.

5. Dispositif de guidage (10) selon l'une quelconque des revendications 3 ou 4,
**caractérisé en ce**
**qu'**au moins un premier rail de guidage (56a) et au moins un deuxième rail de guidage (56b) sont prévus, un premier levier de guidage (32a) de la cinématique à levier (30) étant supporté de manière déplaçable en translation dans l'au moins un premier rail de guidage (56a) et un deuxième levier de guidage (32b) de la cinématique à levier (30) étant supporté de manière déplaçable en translation dans l'au moins un deuxième rail de guidage (56b).

6. Dispositif de guidage (10) selon l'une quelconque des revendications précédentes,
**caractérisé en ce que**
la cinématique à levier (30) présente, pour la connexion à la première portion de guidage (22a), un premier levier de portion (34a) et, pour la connexion à la deuxième portion de guidage (22b), un deuxième levier de portion (34b).

7. Dispositif de guidage (10) selon l'une quelconque des revendications précédentes,
**caractérisé en ce que**
la cinématique à levier (30) présente au moins une première partie de cinématique (30a) qui est connectée à la première portion de guidage (22a) en particulier par le biais du premier levier de portion (34a) et présente au moins une deuxième partie de cinématique (30b) qui est connectée à la deuxième portion de guidage (22b) en particulier par le biais du deuxième levier de portion (34b).

8. Dispositif de guidage (10) selon la revendication 7,
**caractérisé en ce**
**qu'**au moins l'une des deux parties de cinématique (30a, 30b) est en liaison d'entraînement, en particulier par le biais du premier levier de guidage (32a) et/ou du deuxième levier de guidage (32b), avec le dispositif d'entraînement (50), en particulier avec le chariot (52a, 52b).

9. Dispositif de guidage (10) selon l'une quelconque des revendications précédentes,
**caractérisé en ce que**
le dispositif d'entraînement (50) présente au moins un dispositif de chaîne entraîné en circulation (58), par le biais duquel le dispositif d'entraînement (50) est en liaison d'entraînement avec au moins une cinématique à levier supplémentaire (30).

10. Dispositif de guidage (10) selon la revendication 9,
**caractérisé en ce que**
le dispositif de chaîne (58) est connecté par le biais d'au moins une pince (59) à au moins un chariot (52a, 52b) qui est supporté de manière déplaçable en translation le long d'un rail (54a, 54b) et avec lequel la cinématique à levier (30) est en liaison d'entraînement au niveau d'au moins un emplacement, en particulier au niveau de deux emplacements.

11. Dispositif de guidage (10) selon l'une quelconque des revendications précédentes,
**caractérisé en ce**
**qu'**il est prévu au moins un cadre (60) dans lequel le dispositif d'entraînement (50) et/ou la cinématique à levier (30) et/ou les guides latéraux (20) sont supportés.

12. Dispositif de guidage (10) selon l'une quelconque des revendications précédentes,
**caractérisé en ce que**
le dispositif d'entraînement (50) présente au moins un moteur électrique (51), en particulier sous la forme d'un entraînement linéaire.

13. Dispositif de guidage (10) selon l'une quelconque des revendications précédentes,
**caractérisé en ce que**
les deux guides latéraux (20) sont réalisés de manière identique et présentent tous les deux une cinématique à levier (30) en liaison d'entraînement avec le même dispositif d'entraînement (50).

14. Procédé pour ajuster l'angle d'inclinaison (αa, αe) de portions de guidage (22a, 22b) de guides latéraux opposés (20) d'un dispositif de guidage (10) pour guider un film soufflé (100) entre une tête de soufflage de film (300) et un dispositif à rouleaux d'étirage (200),
**caractérisé en ce que**
par l'entraînement d'un dispositif d'entraînement unique commun (50) par le biais d'une liaison d'entraînement à au moins une cinématique à levier (30) qui présente une pluralité d'au moins deux leviers (32a, 32b, 34a, 34b), les angles d'inclinaison (αa, αe) d'au moins deux portions de guidage (22a, 22b) sont variés en commun, notamment simultanément, le dispositif de guidage (10) étant réalisé selon l'une quelconque des revendications 1 à 13.
